# EUROPÄISCHE PATENTSCHRIFT

(11) **EP 0 410 270 B1**
(45) Veröffentlichungstag und Bekanntmachung des Hinweises auf die Patenterteilung: **29.06.1994**
(21) Anmeldenummer: 90113648.1
(22) Anmeldetag: 17.07.1990
(51) Int. Cl.: H04L 1/00, H04L 1/22

(54) **Verfahren zum Betrieb einer signaltechnisch sicheren Schnittstelle**
Method for operating a secure signal transmission interface
Procédé d'utilisation d'une interface fiable de transmission de signaux

(30) Priorität: 22.07.1989 DE 3924266
(43) Veröffentlichungstag der Anmeldung: 30.01.1991
(73) Patentinhaber: Alcatel SEL Aktiengesellschaft, D-70435 Stuttgart (DE)
(72) Erfinder: Schwarzwälder, Jörg, D-7257 Ditzingen (DE)
(74) Vertreter: Pechhold, Eberhard, Dipl.-Phys.

(56) Entgegenhaltungen:
- DE-A- 3 117 089
- DE-C- 3 040 080
- SIGNAL + DRAHT, Band 76, Nr. 5, Mai 1984, Darmstadt, DE; L. WEHNER: "Das ESTW der Bauform SEL"

## Beschreibung

Die Erfindung betrifft ein Verfahren gemäß dem Oberbegriff des Patentanspruchs 1.

Ein solches Verfahren ist aus "Signal + Draht 76" (1984), Heft 5, S. 87, rechte Spalte, Abs. 2 bekannt.

Mit einer nach einem solchen Verfahren betriebenen Schnittstelle ist eine signaltechnisch sichere, bidirektionale Übertragung von Datentelegrammen über eine einzige Datenleitung möglich. Jedes Datentelegramm enthält einen durch Verknüpfung seines Inhaltes mit einem zyklischen Redundanzpolynom gewonnenen Redundanzteil, der nach Empfang geprüft wird. Die Doppelübertragung jedes Telegrammes in normaler und antivalenter Form erlaubt es, die einwandfreie Funktion aller Datenein- und -ausgänge zu prüfen und sofort zu erkennen, wenn sich an einem Ausgang ein Bit nicht mehr ändert.

Tritt bei der nach dem bekannten Verfahren betriebenen Schnittstelle eine Störung auf, so wird diese zwar bemerkt, und die Weiterverwertung der durch die Störung beeinträchtigten Daten wird unterbunden, es wird jedoch in manchen Störungsfällen geraume Zeit benötigt, um festzustellen, welcher Art die Störung war und durch welches Bauelement sie gegebenenfalls verursacht wurde. Um schnell - z.B. durch Umschalten auf redundante Schaltungsteile - auf auftretende Störungen reagieren zu können, ist es wünschenswert, die Schnittstelle so zu betreiben, daß eine im Störungsfalle erforderliche Fehlerdiagnose erleichtert wird.

Sind in die Schnittstelle Schaltungsteile einbezogen, die nicht ständig aktiv sind, wie z.B. die Ausgabe eines nicht zur Schnittstelle durchgeschalteten Rechners in einem sicheren Mehrrechnersystem, so werden während der Ruhezeit dort auftretende Fehler nicht sofort erkannt, was die Wahrscheinlichkeit für das Auftreten von Doppelfehlern erhöht. Ein Betrieb der Schnittstelle, der solche Ruhezeiten und damit die sogenannte Fehleroffenbarungszeit möglichst kurz hält, wäre ebenfalls von großem Vorteil.

Es ist deshalb Aufgabe der Erfindung, das eingangs beschriebene Verfahren so zu verbessern, daß eine Fehlerdiagnose einfacher und schneller durchgeführt werden kann und die Fehleroffenbarungszeit verkürzt wird.

Diese Aufgabe wird durch die im kennzeichnenden Teil des Patentanspruchs 1 angegebenen Merkmale gelöst. Weiterbildungen des Verfahrens nach der Erfindung sind in den Unteransprüchen angegeben.

So stellt der Gegenstand des Patentanspruchs 2 sicher, daß auch bei Verwendung von Mehrrechnersystemen mit mehr als zwei Rechnern alle Schaltungsteile in kurzen Zeitabständen benutzt werden und damit auf eventuell aufgetretene Fehler geprüft werden.

Patentanspruch 3 betrifft eine Möglichkeit, das Fehlen eines Datentelegrammes auch in Fällen, in denen das betreffende Datentelegramm erst gar nicht gesendet wurde, empfangsseitig festzustellen.

Anspruch 4 sieht vor, die Quittierung mehrerer Datentelegramme zusammenzufassen.

Der Gegenstand des Anspruchs 5 erlaubt, die Reihenfolge der Datentelegramme auch dann exakt einzuhalten, wenn ein Datentelegramm wiederholt werden muß und bereits andere Datentelegramme mit in der Reihenfolge später folgenden Nachrichtennummern abgesetzt wurden.

Anhand zweier Figuren soll nun ein Ausführungsbeispiel einer nach dem Verfahren nach der Erfindung betriebenen Schnittstelle ausführlich beschrieben werden.
- Fig. 1: zeigt schematisch die nach der Erfindung betriebene Schnittstelle.
- Fig. 2: zeigt den Aufbau eines Datentelegrammes.

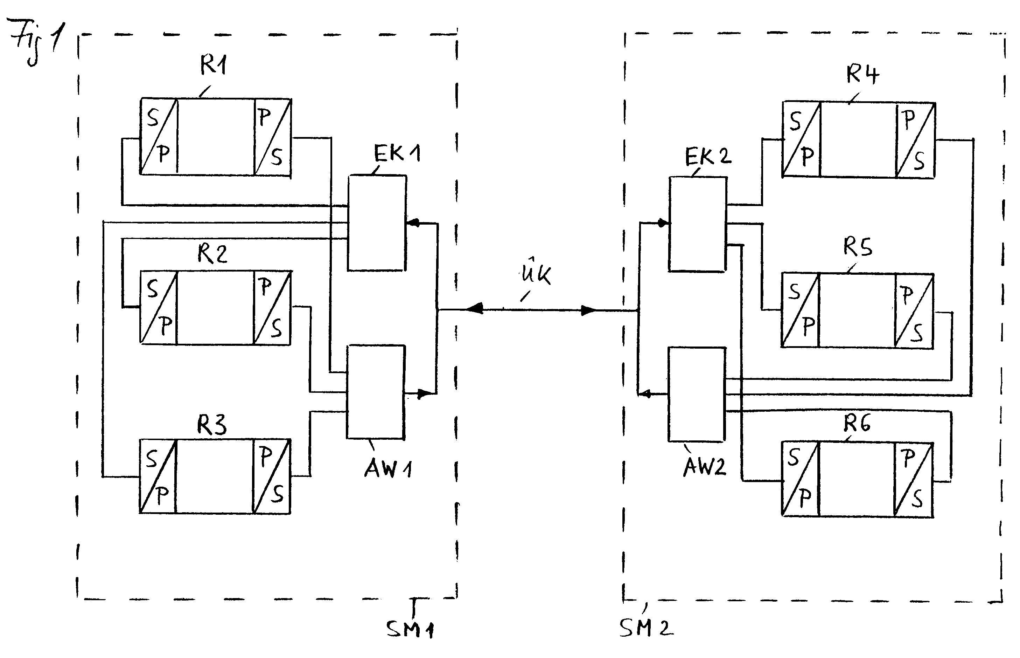

In Fig. 1 sind zwei signaltechnisch sichere, mit Mehrrechnersystemen R1, R2, R3 und R4, R5, R6 ausgestattete Baugruppen SM1, SM2 dargestellt, die über eine Schnittstelle miteinander verbunden sind. Die Schnittstelle wird dabei in beiden Übertragungsrichtungen benutzt und benötigt nur einen Datenübertragungskanal ÜK.

Die Rechner jeder Baugruppe erarbeiten die zu übertragenoen Datentelegramme parallel. Sie tauschen ihre Ergebnisse über nicht dargestellte Verbindungen untereinander aus und vergleichen die Ergebnisse der Nachbarrechner jeweils mit dem selbst erarbeiteten Ergebnis. Über eine Auswahleinrichtung AW1, AW2, welche Vergleichsergebnisse von allen Rechnern der Baugruppe erhält, werden jeweils zwei der Rechner in zyklischer Reihenfolge zur Datentelegrammausgabe ausgewählt. Von diesen beiden Rechnern gibt ein Rechner sein Datentelegramm in gewöhnlicher Form, der andere sein Datentelegramm in invertierter Form auf den Übertragungskanal ÜK aus. Dabei werden die Datentelegramme der ausgewählten Rechner in je einem ausgangsseitigen Parallel/Seriell-Wandler P/S in eine serielle Bitfolge umgesetzt.

In der empfangenden Baugruppe wird das seriell ankommende Datentelegramm einer Entkopplungsschaltung EK1, EK2 zugeführt, die es auf eingangsseitige Seriell/Parallel-Wandler S/P sämtlicher Rechner der Baugruppe weiterleitet.

Die Prüfung und Auswertung der Datentelegramme erfolgt in den Rechnern der empfangenden Baugruppe parallel. Auch dabei erfolgt ein Ergebnisaustausch und ein Vergleich der Rechnerergebnisse untereinander.

Der Sicherung der Datentelegramme gegen Bauelementefehler in den zur Datentelegramm-Aus- und Eingabe und den zur Seriell/Parallel- und Parallel/Seriell-Wandlung verwendeten Schaltungen dient die oben erwähnte Doppelübertragung jedes Datentelegrammes in normaler und in invertierter Form.

Weitere, das einzelne Datentelegramm betreffende Maßnahmen stellen sicher, daß das betreffende Datentelegramm nicht ausgewertet wird, wenn es während der Übertragung, z.B. durch elektromagnetische Einstreuung, verfälscht wurde. Sie ermöglichen auch die Prüfung des Datentelegrammes hinsichtlich Herkunft, Übertragungsrichtung, Valenzlage und Stellung in einer vorgegebenen zeitlichen Reihenfolge.

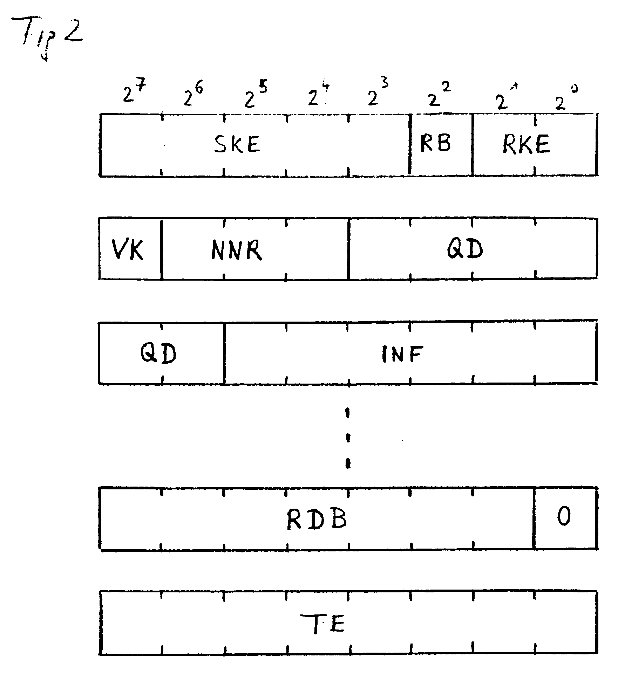

In Fig. 2 ist der Aufbau eines Datentelegrammes wiedergegeben. Das Datentelegramm enthält insgesamt 9 Bytes, von denen die Bytes 4 bis 7 nur Informationsbits enthalten und deshalb nicht dargestellt sind.

Das erste Byte enthält eine Schnittstellenkennung SKE (5 Bit), die bei der Verarbeitung im Rechner zur Unterscheidung des jeweiligen Datentelegrammes von solchen Datentelegrammen, die über andere Schnittstellen eingehen, benötigt wird. Ferner enthält das erste Byte noch ein Bit RB zur Richtungssteuerung und zwei Bit RKE zur Kennzeichnung des Herkunftrechners.

Das zweite Byte enthält ein Bit VK zur Valenzkennzeichnung, aus dem der empfangende Rechner erkennt, ob das Datentelegramm in gewöhnlicher Form oder in invertierter Form vorliegt, weiterhin eine drei Bit umfassende Nachrichtennummer NNR, die von Datentelegramm zu Datentelegramm beispielsweise um 1 erhöht wird und aus der der empfangende Rechner erkennt, wenn ein Datentelegramm fehlt, und schließlich vier Bit, die zusammen mit zwei Bit des folgenden dritten Byte einen Quittungsdatenblock QD bilden, der der Empfangsbestätigung des zuvor in Gegenrichtung übertragenen Datentelegrammes dient. Die restlichen Bit des dritten Byte sind Informationsbits INF.

Das achte Byte enthält insgesamt 7 Redundanzbits RDB, oie durch Anwendung eines zyklischen Code eine Datensicherung mit Hammingdistanz H = 4 sicherstellen.

Das letzte Bit des achten Byte ist ständig auf Null programmiert, um eine zufällige Folge von 8 gleichen Bit mit der Wertigkeit 1 im achten Byte zu verhindern, die fälschlicherweise "Telegrammende" signalisieren würde.

Erst das neunte und letzte Byte enthält die fest codierte Telegrammendekennung TE, nämlich acht gleiche Bit mit der Wertigkeit 1. Das neunte Byte wird, wie auch das letzte Bit des achten Byte, bei der Bildung des Inverstelegramms nicht mitinvertiert.

Fehlerhaft erarbeitete Datentelegramme werden, sofern der Fehler innerhalb eines Rechners aufgetreten ist, bereits durch den Vergleich der Rechnerergebnisse untereinander innerhalb der das Datentelegramm erstellenden Baugruppe erkannt. Durch einen Mehrheitsentscheid in der Auswahleinrichtung wird der fehlerhaft erarbeitete Datentelegramme liefernde Rechner von der Datenausgabe ausgeschlossen. Infolge der Kennzeichnung des Herkunftrechners im Datentelegramm stellt oie empfangende Baugruppe, ohne eine besondere Mitteilung darüber erhalten zu haben, fest, daß von einem Rechner keine Datentelegramme mehr empfangen werden, und kann auf diese Störung reagieren, beispielsweise die Störung anzeigen oder eine andere Schnittstelle zu einer anderen redundanten Baugruppe aktivieren.

Bei Fehlern in Schaltungsteilen, die durch die Prüfung mittels Vergleichs der Rechnerergebnisse untereinander nicht mehr erfaßt werden, wie z.B. die Ausgaben der Rechner zur Datenleitung hin oder die der Parallel-Seriell-Wandlung dienenden Schaltungsteile, ist die Möglichkeit, fehlerhafte Datentelegramme empfangsseitig zu erkennen, noch wichtiger als bei rechnerinternen Fehlern.

Bei Verwendung des in Fig. 2 beschriebenen Datentelegrammes wird in diesem Fall nicht nur erkannt, wenn ein Datentelegramm fehlerhaft ist, beispielsweise die Antivalenz zu seinem Inverstelegramm nicht gegeben ist, sondern es wird durch Auswertung der verschiedenen Kennungen und der fehlenden Quittung auch festgestellt, an welcher Stelle der Schaltung ein Fehler aufgetreten sein muß.

Werden durch kurzzeitig auftretende Fehler gestörte Datentelegramme wiederholt, so kann es vorkommen, daß die zeitliche Reihenfolge der nacheinander zu übertragenden Informationen gestört wird und eine Information, die einer vorangehenden Information folgen soll, vor dieser Information ihren Bestimmungsort erreicht. Um dies und daraus resultierende Störungen auszuschließen, werden aufeinanderfolgende Informationen zyklisch von 1 bis 8 durchgezählt und mit ihrer jeweiligen Zählnummer (Nachrichtennummer) gekennzeichnet.

Datentelegramme, deren Nachrichtennummer nicht der in der Reihenfolge zu erwartenden Nachrichtennummer entspricht, werden als ungültig angesehen und verworfen.

## Patentansprüche

1. Verfahren zum Betrieb einer Schnittstelle, die eine signaltechnisch sichere, serielle Übertragung von Daten zwischen mit parallel arbeitenden Rechnern ausgestatteten Baugruppen einer Eisenbahnsignalanlage und hierzu einen zyklischen Binärcode und eine antivalente Doppelübertragung von Datentelegrammen zur Datensicherung verwendet, **gekennzeichnet** durch die Kombination folgender Merkmale:
a) zueinander antivalente Datentelegramme werden von verschiedenen Rechnern (R1, R2, R3; R4, R5, R6) zur Übertragung auf die Datenleitung (ÜK) ausgegeben,
b) alle Datentelegramme werden mit Kennungen versehen, die die Übertragungsrichtung (RB), die Valenzlage (VK) (normal oder antivalent) und den Herkunftsrechner (RKE) eindeutig kennzeichnen,
c) alle Datentelegramme werden empfangsseitig, zusätzlich zur Prüfung ihres Redundanzteiles (RDB) und ihrer paarweisen Antivalenz, auf regelmäßigen Wechsel des Herkunftsrechners hin geprüft,
d) in jedes Datentelegramm werden eine dieses Datentelegramm kennzeichnende Nachrichtennummer (NNR) sowie ein Quittungsdatenblock (QD) aufgenommen,
e) in den Quittungsdatenblock wird die Nachrichtennummer des zuvor in Gegenrichtung übertragenen Datentelegrammes zusammen mit einer vom Ausgang der empfangsseitigen Prüfung dieses Datentelegrammes abhängigen Quittungsaussage eingeschrieben,
f) bei Ausbleiben eines Quittungsdatenblockes mit positiver Quittungsaussage auf der Senderseite wird die Übertragung des zuvor übertragenen Datentelegrammes wiederholt.

2. Verfahren nach Anspruch 1, dadurch gekennzeichnet, daß bei Verwendung von Baugruppen mit mehr als zwei parallel arbeitenden Rechnern alle Rechner, jeweils einander abwechselnd, zur Ausgabe von Datentelegrammen auf die Datenleitung ausgewählt werden.

3. Verfahren nach Anspruch 1 oder 2, dadurch gekennzeichnet, daß die Nachrichtennummern der Datentelegramme in fortlaufender Reihenfolge vergeben werden, daß die Datentelegramme empfangsseitig daraufhin geprüft werden, 0b ihre jeweilige Nachrichtennummer der Reihenfolge entspricht, und daß nur, wenn dies der Fall ist, der Empfang eines Datentelegrammes positiv quittiert wird.

4. Verfahren nach Patentanspruch 1, 2 oder 3, dadurch gekennzeichnet, daß in den Quittungsdatenblock die Nachrichtennummern mehrerer zuvor übertragener Datentelegramme mit der sie betreffenden Quittungsaussage eingeschrieben werden.

5. Verfahren nach einem der Patentansprüche 3 oder 4, dadurch gekennzeichnet, daß im Falle der Wiederholung der Übertragung eines Datentelegrammes bereits übertragene Datentelegramme mit Nachrichtennummern, die in der Reihenfolge hinter der Nachrichtennummer des zu wiederholenden Datentelegrammes stehen, nicht weiterverarbeitet werden.

## Claims

1. Method of operating an interface which uses a fail-safe, serial transfer of data between assemblies of a railway-signalling system which are equipped with parallel computers, said interface using for this purpose a cyclic binary code and an inverse double transmission of data messages for error protection, characterized by the combination of the following features:
a) mutually inverse data messages are placed by different computers (R1, R2, R3; R4, R5, R6) on the data line (ÜK) for transmission;
b) all data messages are provided with identifications which unequivocally identify the direction of transmission (RB), the state (VK) (normal or inverse), and the origin computer (RKE);
c) at the receiving end, all the data messages, besides being subjected to a check of their redundant part (RDB) and checked in pairs for their inverse relationship, are checked for a regular change of the origin computer;
d) each data message is provided with a message number (NNR) which characterizes it and an acknowledgement data block (QD);
e) the message number of the data message previously transmitted in the opposite direction together with an acknowledgement dependent on the result of the check of said data message at the receiving end is written into the acknowledgement data block, and
f) if an acknowledgement data block with a positive acknowledgement fails to appear at the transmitting end, the transmission of the previously transmitted data message is repeated.

2. Method as claimed in Claim 1, characterized in that if assemblies with more than two parallel computers are used, all the computers are in each case selected alternately for placing data messages on the data line.

3. Method as claimed in Claim 1 or 2, characterized in that the message numbers of the data messages are assigned in consecutive order, in that, at the receiving end, the data messages are checked as to whether their respective message number agrees with said order, and in that a positive acknowledgement of the receipt of a data message is sent only if that is the case.

4. Method as claimed in Claim 1, 2 or 3, characterized in that the message numbers of a plurality of previously transmitted data messages, together with the acknowledgement relating to them, are written into the acknowledgement data block.

5. Method as claimed in Claim 3 or 4, characterized in that, if the transmission of a data message is to be repeated, already transmitted data messages with message numbers which follow the message number of the data message to be repeated in order are not further processed.

## Revendications

1. Procédé d'utilisation d'une interface qui emploie, pour assurer la sécurité des données, une transmission sérielle, sûre au point de vue technique du signal, des données entre des modules d'une installation de signalisation de chemin de fer équipés de calculateurs travaillant en parallèle, ainsi que, dans ce but, un code binaire cyclique et une double transmission antivalente de télégrammes de données, procédé caractérisé par la combinaison des attributs suivants:
a) des télégrammes de données antivalents l'un de l'autre sont émis par différents calculateurs (R1, R2, R3; R4, R5, R6) pour transmission sur la ligne de données (UK),
b) tous les télégrammes de données sont munis d'identifications qui caractérisent sans ambiguité le sens de transmission (RB), la position de valence (VK), (normale ou antivalente) et le calculateur d'origine (RKE),
c) tous les télégrammes de données sont, du côté réception, en plus d'être vérifiés pour leur partie redondante (RDB) et leur antivalence par paire, également vérifiés en ce qui concerne le changement régulier du calculateur d'origine,
d) dans chaque télégramme de données se trouvent un numéro de message (NNR) caractérisant ce télégramme de données ainsi qu'un bloc de données d'accusé de réception (QD),
e) dans le bloc de données d'accusé de réception est enregistré le numéro de message du télégramme de données précédemment transmis en sens opposé avec une information d'accusé de réception fonction du signal de sortie de la vérification, faite du côté réception, de ce télégramme de données,
f) en l'absence d'un bloc de données d'accusé de réception comportant une information positive d'accusé de réception du côté émetteur, la transmission du télégramme de données précédemment transmis se répète.

2. Procédé selon la revendication 1, caractérisé par le fait qu'en cas d'emploi de modules comportant plus de deux calculateurs travaillant en parallèle, tous les calculateurs sont, chacun alternativement, sélectionnés pour émettre les télégrammes de données sur la ligne de données.

3. Procédé selon la revendication 1 ou 2, caractérisé par le fait que les numéros de message des télégrammes de données sont attribués en succession continue, par le fait que, du côté réception, les télégrammes de données sont vérifiés sur la question de savoir si leur numéro de message respectif correspond à la succession et par le fait que ce n'est que si c'est le cas que la réception d'un télégramme de données donne lieu à un accusé de réception positif.

4. Procédé selon la revendication 1, 2 ou 3, caractérisé par le fait que dans le bloc de données d'accusé de réception les numéros de message de plusieurs télégrammes de données précédemment transmis sont enregistrés avec l'information d'accusé de réception qui les concerne.

5. Procédé selon l'une des revendications 3 ou 4, caractérisé par le fait qu'en cas de répétition de la transmission d'un télégramme de données on ne poursuit pas le traitement des télégrammes de données déjà transmis dont les numéros de message se trouvent, dans la succession, derrière le numéro de message du télégramme de données à répéter.
